# EUROPEAN PATENT APPLICATION

(11) **EP 4 293 813 A1**
(43) Date of publication of application: **20.12.2023**
(21) Application number: 22896160.3
(22) Date of filing: 21.11.2022
(51) Int. Cl.: H01M 50/583, H01M 50/595, H01M 50/586, H01M 50/538, H01M 10/04

(54) **CURRENT COLLECTOR, JELLY ROLL, SECONDARY BATTERY, BATTERY PACK, AND VEHICLE**

(30) Priority: 22.11.2021 KR 20210160968
(71) Applicant: LG ENERGY SOLUTION, LTD., Seoul 07335 (KR)
(72) Inventor: LEE, Byoungkook, Daejeon 34122 (KR); KIM, Byung Sup, Daejeon 34122 (KR); NAM, Kyung Ho, Daejeon 34122 (KR)
(74) Representative: Goddar, Heinz J.
(86) International application number: PCT/KR2022/018386
(87) International publication number: WO 2023/090963

(57) **Abstract**

A current collector includes a body part having conductivity, a terminal coupling part configured to be coupled to an electrode terminal, and a fuse part configured to connect the body part and the terminal coupling part, in which the fuse part includes at least one notch provided on one surface thereof, and an insulation portion provided on at least one surface of the fuse part. The current collector can used as part of a jelly roll, a secondary battery, a battery pack, and a vehicle.

## Description

### [Technical Field]

This application claims priority to and the benefit of Korean Patent Application No. 10-2021-0160968 filed with the Korean Intellectual Property Office on November 22, 2021, the entire contents of which are incorporated herein by reference.

The present invention relates to a current collector, a jelly roll, a secondary battery, a battery pack, and a vehicle.

### [Background Art]

A secondary battery is easy to apply to product groups and has high electrical characteristics such as high energy density. Therefore, the secondary battery is widely applied not only to portable devices but also to electric vehicles (EVs) or hybrid electric vehicles (HEVs) driven by electrical driving sources.

The secondary battery attracts attention as a new energy source for improving environmental-friendly characteristics and energy efficiency because the secondary battery achieves a primary advantage of innovatively reducing the use of fossil fuel and does not generate any by-products from the use of energy.

Types of secondary batteries currently used widely include a lithium-ion battery, a lithium-polymer battery, a nickel-cadmium battery, a nickel-hydrogen battery, a nickel-zinc battery, and the like. An operating voltage of a unit secondary battery cell, i.e., a unit battery cell is about 2.5 V to 4.5 V. Therefore, when an output voltage higher than the operating voltage is required, a plurality of battery cells is connected in series and constitutes a battery pack. In addition, the plurality of battery cells is connected in parallel and constitutes the battery pack depending on a charge/discharge capacity required for the battery pack. Therefore, the number of battery cells included in the battery pack and the type of electrical connection between the battery cells may be variously set depending on required output voltages and/or charge/discharge capacities.

### [Detailed Description of the Invention]

### [Technical Problem]

The present invention provides a current collector, which has a fuse part that reduces a likelihood of occurrence of a short circuit, a jelly roll, a secondary battery, a battery pack, and a vehicle.

### [Technical Solution]

An embodiment of the present invention provides a current collector including: a body part having conductivity; a terminal coupling part configured to be coupled to an electrode terminal; and a fuse part configured to connect the body part and the terminal coupling part, in which the fuse part includes at least one notch provided on one surface thereof, and an insulation portion provided on at least one surface of the fuse part.

Another embodiment of the present invention provides a jelly roll including: an electrode assembly having a structure made by winding a stack of a positive electrode, a separator, and a negative electrode; and the current collector according to the above-mentioned embodiment provided on at least one end of the electrode assembly.

Still another embodiment of the present invention provides a secondary battery, a battery pack, and a vehicle that include the jelly roll according to the above-mentioned embodiment.

### [Advantageous Effects]

According to the embodiments of the present invention, the current collector includes the fuse part capable of blocking a current path by being melted by heat generated in the event of an external short circuit, and the insulation portion is provided on the surface of the fuse part that faces the electrode assembly. Therefore, it is possible to prevent a problem in that heat generated from the fuse part is transferred to the electrode assembly and deforms the electrode assembly or melts the separator. In addition, it is possible to prevent a problem of a short circuit caused by fragments or debris generated from the material of the current collector and dropped in a direction toward the electrode assembly when the fuse part is melted.

As described above, the heat generated in the event of the external short circuit may be stably treated, such that the tab structure of the electrode included in the electrode assembly is formed as the non-coated portion of the current collector, on which no electrode active material is not applied. Therefore, it is possible to increase electric current to be applied to the battery. Therefore, the size of the battery may be increased, the high-energy density may be implemented, and the costs may be reduced.

### [Brief Description of Drawings]

FIG. 1 is a view illustrating a schematic structure of a current collector according to an embodiment of the present invention.
FIG. 2 is a view illustrating a configuration in which an insulation portion is an insulation tape in the current collector according to the embodiment of the present invention.
FIG. 3 is a view illustrating a configuration in which the insulation portion is an insulation layer in the current collector according to the embodiment of the present invention.
FIG. 4 is a view schematically illustrating a position at which a notch is provided on the current collector included in a jelly roll according to the embodiment of the present invention.
FIG. 5 is a view illustrating a schematic configuration of a secondary battery according to the embodiment of the present invention.
FIG. 6 is a longitudinal sectional view of the secondary battery in FIG. 5.
FIG. 7 is a view illustrating a schematic configuration of a battery pack including the secondary battery in FIG. 6.
FIG. 8 is a view illustrating a schematic configuration of a vehicle including the battery pack in FIG. 7.

### [Explanation of Reference Numerals and Symbols]

1: Secondary battery
2: Pack housing
3: Battery pack
5: Vehicle
10: Electrode assembly
10': Jelly roll
C: Mandrel part
CR: Periphery of mandrel part
O: Outer peripheral portion
11: Positive electrode
12: Negative electrode
13: Separator
20: Battery can
21: Beading portion
22: Crimping portion
30: Sealing body
40: Electrode terminal
50: Positive electrode current collector
60: Insulator
70: Insulation gasket
80: Negative electrode current collector
90: Sealing gasket
100: Current collector
110: Body part
120: Terminal coupling part
130: Fuse part
140: Notch
140L: Region in which notch is provided
150: Insulation portion
151: Insulation tape
152: Insulation layer
160: Groove

### [Best Mode]

Terms or words used in the specification and the claims should not be interpreted as being limited to a general or dictionary meaning and should be interpreted as a meaning and a concept which conform to the technical spirit of the present invention based on a principle that an inventor can appropriately define a concept of a term in order to describe his/her own invention by the best method.

Throughout the present specification, unless explicitly described to the contrary, the word "comprise/include" and variations such as "comprises/includes" or "comprising/including" will be understood to imply the inclusion of stated elements, not the exclusion of any other elements.

In addition, the term "part", "device", or the like, which is described in the specification, means a unit that processes one or more functions or operations.

Hereinafter, embodiments of the present invention will be described with reference to the drawings.

An embodiment of the present invention provides a current collector including: a body part having conductivity; a terminal coupling part configured to be coupled to an electrode terminal; and a fuse part configured to connect the body part and the terminal coupling part, in which the fuse part includes at least one notch provided on one surface thereof, and an insulation portion provided on at least one surface of the fuse part.

The structure or material of the body part having conductivity is not limited as long as the body part of the current collector may electrically connect an external terminal and a tab part of an electrode of a secondary battery. For example, the body part has a rim having a circular shape corresponding to a shape of one end of the electrode assembly. The entire interior of the body part may be filled with a conductive material, and a partial region of the body part may be opened, as necessary.

The insulation portion may be provided only on one surface of the fuse part or provided on two or more surfaces or all the surfaces of the fuse part.

At least one notch is provided on one surface of the fuse part, such that the fuse part may be melted by heat generated in the event of an external short circuit, thereby blocking a current path. When the current path is blocked, a voltage of the secondary battery cannot be measured, and an abnormal resistance value may be measured. Therefore, it is possible to prevent a problem in that heat generated from the fuse part is transferred to an electrode assembly and deforms the electrode assembly or melts a separator. Further, it is possible to prevent a problem of a short circuit caused by fragments or debris generated from the material of the current collector and dropped in a direction toward the electrode assembly when the fuse part is melted.

In contrast, because a current collector in the related art does not have the notch, heat generated from a positive electrode tab of a secondary battery including the current collector is transferred to an electrode assembly and melts an insulator.

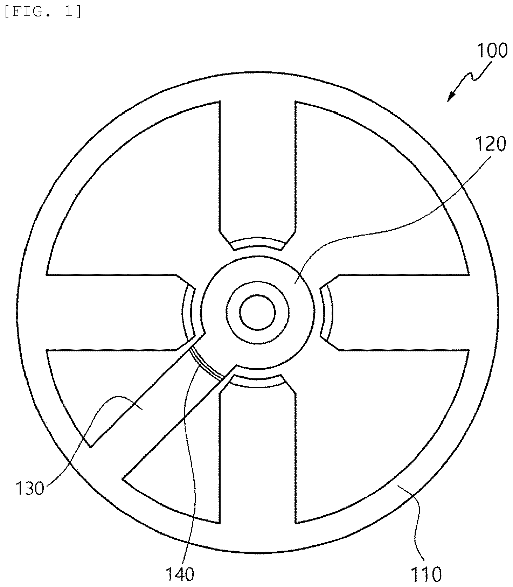

FIG. 1 is a view illustrating a schematic structure of a current collector according to an embodiment of the present invention.

Referring to FIG. 1, a current collector 100 includes: a body part 110 having conductivity; a terminal coupling part 120 configured to be coupled to the electrode terminal 40; and a fuse part 130 configured to connect the body part 110 and the terminal coupling part 120. The fuse part 130 includes: at least one notch 140 provided on one surface thereof; and an insulation portion (not illustrated) provided on at least one surface of the fuse part.

The structure of the body part 110 is not limited as long as the body part 110 of the current collector 100 may electrically connect an external terminal and a tab part of an electrode of a secondary battery. For example, the body part 110 may have a circular rim. The entire interior of the body part 110 may be filled with a conductive material, and a partial region of the body part 110 may be opened, as necessary.

The fuse part 130 is not limited in structure, material, or number as long as the fuse part 130 connects the body part 110 and the terminal coupling part 120. For example, the fuse part 130 may be provided as a plurality of fuse parts 130 that connects the body part 110 and the terminal coupling part 120 in multiple directions, but the number of connected fuse parts 130 is not limited. The fuse part 130, at one or more portions, may connect the body part 110 and the terminal coupling part 120.

Referring to FIG. 1, the notch 140 may mean a V-shaped groove formed in the fuse part 130. The fuse part 130 has at least one notch 140 provided on one surface thereof, and the fuse part 130 may be melted by heat generated in the event of an external short circuit and block a current path.

In addition, the fuse part 130 has the insulation portion at least provided on a surface facing the electrode assembly, which makes it possible to prevent a problem in that heat generated from the fuse part 130 is transferred to the electrode assembly and deforms the electrode assembly or melts a separator. Further, it is possible to prevent a problem of a short circuit caused by fragments or debris generated from the material of the current collector 100 and dropped in a direction toward the electrode assembly when the fuse part 130 is melted.

The embodiment of the present invention provides the current collector having the insulation portion (not illustrated) provided on the surface of the fuse part 130 opposite to the surface in which the notch 140 is provided.

The notch 140 may be provided in one surface of the fuse part 130, and the insulation portion may be provided on the surface opposite to the surface in which the notch 140 is provided. For example, the surface of the fuse part 130 opposite to the surface in which the notch 140 is provided may be a surface facing the electrode assembly.

The fuse part 130 may have at least one notch 140 provided on one surface thereof, and the fuse part 130 may be melted by heat generated in the event of an external short circuit and block a current path. The fuse part 130 may have the insulation portion provided on the surface opposite to the surface in which the notch 140 is provided, which makes it possible to prevent a problem in that heat generated from the fuse part 130 is transferred to the electrode assembly and deforms the electrode assembly or melts the separator. Further, it is possible to prevent a problem of a short circuit caused by fragments or debris dropped in the direction toward the electrode assembly.

According to the embodiment of the present invention, the insulation portion is an insulation tape.

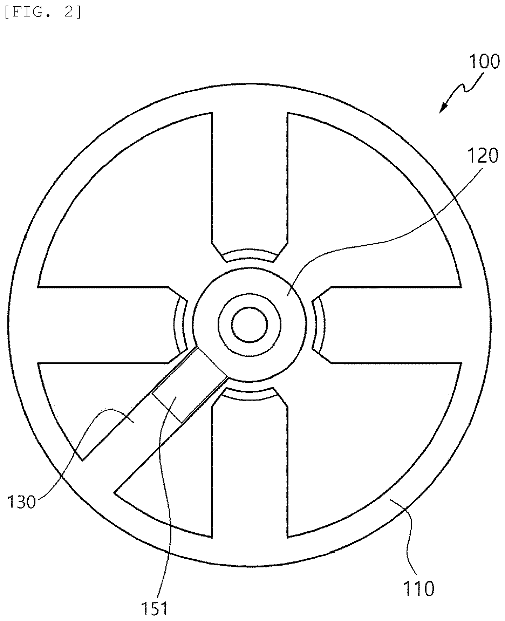

FIG. 2 is a view illustrating a configuration in which the insulation portion is an insulation tape in the current collector according to the embodiment of the present invention.

FIG. 2 illustrates a structure in which an insulation tape 151 is attached to the current collector 100. For example, the insulation tape 151 may be attached in a state in which the fuse part 130 stands in a direction perpendicular to the current collector 100.

The insulation tape 151 may be attached to one surface of the fuse part 130 in which the notch 140 is provided, or the insulation tape 151 may be attached to the surface opposite to one surface of the fuse part 130 in which the notch 140 is provided. The insulation tape 151 may be attached to an upper surface of the notch 140 or the surface opposite to the upper surface of the notch 140.

According to the embodiment of the present invention, the insulation portion is an insulation layer. In this case, the insulation layer may be structured to be provided on a groove provided in at least one surface of the fuse part.

According to the embodiment of the present invention, the groove is provided in the surface opposite to the surface of the fuse part in which the notch is provided. The groove may be provided at a position corresponding to the notch and provided on the surface opposite to the surface of the fuse part in which the notch is provided.

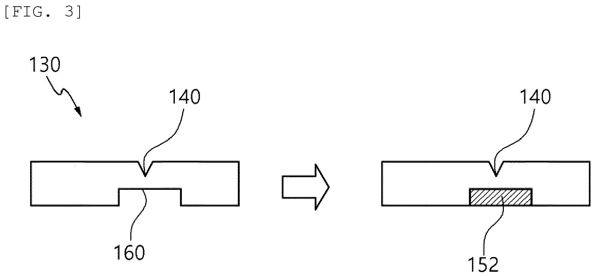

FIG. 3 is a view illustrating a configuration in which the insulation portion is an insulation layer in the current collector according to the embodiment of the present invention.

FIG. 3 illustrates a structure in which an insulation layer 152 is provided in a groove 160 provided in one surface of the fuse part 130. The groove 160 may be formed by applying a stepped portion by a forging process method.

The groove 160 may be provided in the surface opposite to the surface of the fuse part 130 in which the notch 140 is provided. The groove 160 may be provided at a position corresponding to the notch 140 and provided on the surface opposite to the surface of the fuse part 130 in which the notch 140 is provided. For example, the notch 140 and the groove 160 may be provided at the positions facing each other in a cross-section of the fuse part 130.

When viewed in a side cross-section of the fuse part 130, a thickness of the groove 160 may be set to be equal to or smaller than the remaining thickness of the fuse part 130 made by subtracting a depth of the notch 140 from the overall thickness of the fuse part.

In case that the insulation layer 152 is provided in the groove 160 at the above-mentioned position, it is possible to prevent a problem in that heat generated from the fuse part 130 is transferred to the electrode assembly and deforms the electrode assembly or melts the separator. Further, it is possible to prevent a problem of a short circuit caused by fragments or debris generated from the material of the current collector 100 and dropped in the direction toward the electrode assembly when the fuse part is melted.

According to the embodiment of the present invention, the material of the insulation tape and the insulation layer is not particularly limited as long as the material may implement insulation.

According to the embodiment of the present invention, the insulation layer is an adhesive polymer. The adhesive polymer may include one or more materials selected from a group consisting of polyimide (PI), polyethylene (PE), polypropylene (PP), polybutylene terephthalate (PBT), and perfluoroalkoxy alkane (PFA).

The insulation layer including the above-mentioned material may have heat resistance and chemical resistance in the secondary battery. In addition, it is possible to prevent a problem in that heat generated from the fuse part is transferred to the electrode assembly and deforms the electrode assembly or melts the separator. Further, it is possible to prevent a problem of a short circuit caused by fragments or debris generated from the material of the current collector and dropped in a direction toward the electrode assembly when the fuse part is melted.

According to the embodiment of the present invention, polypropylene (PP) contains polypropylene maleic anhydride (PP-MAH) that may be bonded by applied heat.

The adhesive polymer including the above-mentioned compound may be bonded by applied heat and have heat resistance and chemical resistance in the secondary battery. In addition, the adhesive polymer may form an insulation layer by heat generated from the fuse part. Therefore, it is possible to prevent a problem in that heat generated from the fuse part is transferred to an electrode assembly and deforms the electrode assembly or melts a separator. Further, it is possible to prevent a problem of a short circuit caused by fragments or debris generated from the material of the current collector and dropped in a direction toward the electrode assembly when the fuse part is melted.

An additional embodiment of the present invention provides a jelly roll including: an electrode assembly having a structure made by winding a stack of a positive electrode, a separator, and a negative electrode; and the current collector according to the above-mentioned embodiment provided on at least one end of the electrode assembly.

According to the embodiment of the present invention, the insulation portion may be provided on the surface of the current collector that faces the electrode assembly. Because the insulation portion is provided on the surface that faces the electrode assembly, it is possible to prevent heat and fragments or debris of the current collector from affecting the electrode assembly when the fuse part is melted by heat generated by an external short circuit.

According to the embodiment of the present invention, the notch is provided in a region of one surface of the fuse part overlying an area between a periphery of a mandrel part of the electrode assembly to an outer peripheral portion of the electrode assembly.

The notch may be provided at any position on one surface of the fuse part without limitation. In particular, the notch may be provided in the region of one surface of the fuse part overlying an area between the periphery of the mandrel part of the electrode assembly to the outer peripheral portion of the electrode assembly, and the insulation portion is provided in the region at the position corresponding to the notch. Therefore, it is possible to prevent heat and fragments or debris of the current collector from affecting the electrode assembly when the fuse part is melted by heat generated by an external short circuit, thereby additionally ensuring safety.

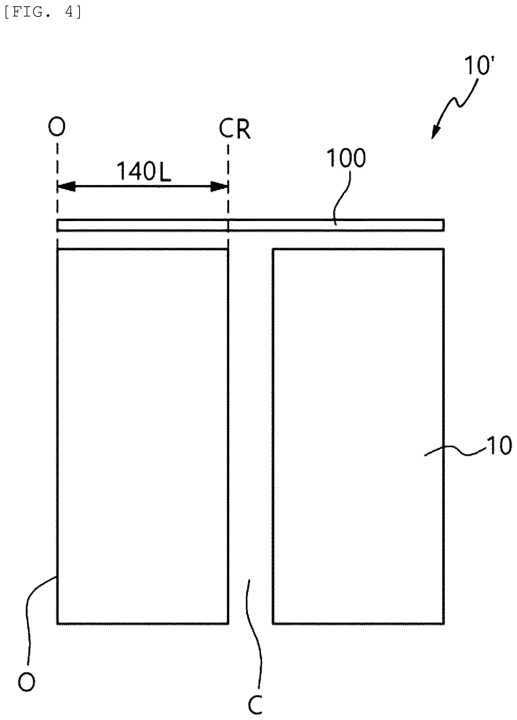

FIG. 4 is a view schematically illustrating a position at which the notch is provided on the current collector included in a jelly roll according to the embodiment of the present invention.

Referring to FIG. 4, the notch is provided (140L) in the region of one surface of the fuse part 130 from the periphery CR of the mandrel part of the electrode assembly to the outer peripheral portion O of the electrode assembly. Therefore, the insulation portion provided at the position corresponding to the notch may prevent heat and fragments or debris of the current collector from affecting the electrode assembly when the fuse part is melted by heat generated by an external short circuit.

Another embodiment of the present invention provides a secondary battery including the jelly roll according to the above-mentioned embodiment.

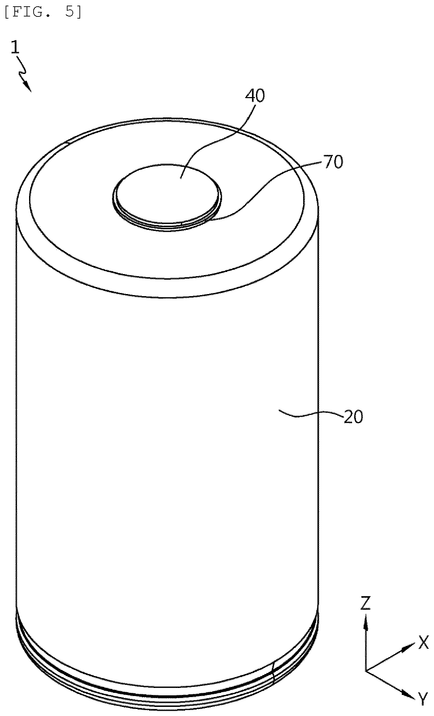

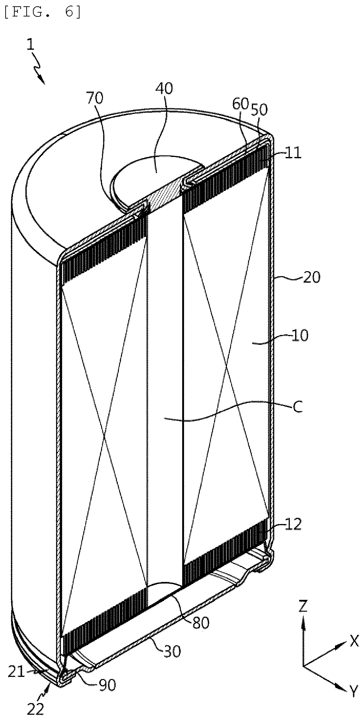

FIG. 5 is a schematic configuration of the secondary battery according to the embodiment of the present invention, and FIG. 6 is a longitudinal sectional view of the secondary battery in FIG. 5.

Referring to FIGS. 5 and 6, a secondary battery 1 according to the embodiment of the present invention includes an electrode assembly 10, a battery can 20, a sealing body 30, and an electrode terminal 40. The jelly roll may include the electrode assembly 10 and a positive electrode current collector 50. In addition to the above-mentioned constituent elements, the secondary battery 1 may additionally and further include an insulation member 60, an insulation gasket 70, a negative electrode current collector 80, and/or a sealing gasket 90.

The current collector according to the embodiment of the present invention may be the positive electrode current collector 50.

Referring to FIGS. 5 and 6, the electrode assembly 10 includes a positive electrode 11, a negative electrode 12, and a separator interposed between the positive electrode 11 and the negative electrode 12.

The positive electrode 11 and the negative electrode 12 may each have a sheet shape. For example, the electrode assembly 10 may have a jelly-roll shape. That is, the electrode assembly 10 may be manufactured by winding a stack, which is made by sequentially stacking the positive electrode, the separator, and the negative electrode, and the separator at least once, around a mandrel part C. In this case, an additional separator may be provided on an outer peripheral surface of the electrode assembly 10 to implement insulation from the battery can 20.

The positive electrode 11 and the negative electrode 12 may respectively include non-coated portions at long side ends thereof, and the non-coated portions are not coated with an active material layer. The positive electrode 11 and the negative electrode 12 may respectively include coated portions that are regions coated with the active material layer, except for the non-coated portions.

Specifically, the positive electrode 11 includes a positive electrode current collector, and a positive electrode active material applied onto one surface or two opposite surfaces of the positive electrode current collector. The region in which the positive electrode active material is applied onto the positive electrode current collector is referred to as the coated portion provided on the positive electrode 11. The non-coated portion onto which no positive electrode active material is applied may be provided at one side end of the positive electrode current collector based on a width direction (a direction parallel to a Z-axis). At least a part of the non-coated portion is used as an electrode tab as it is. That is, the non-coated portion serves as the non-coated portion provided on the positive electrode 11. The non-coated portion provided on the positive electrode 11 is provided at an upper side of the electrode assembly 10 based on a height direction (the direction parallel to the Z-axis), and the electrode assembly 10 is accommodated in the battery can 20.

The negative electrode 12 includes a negative electrode current collector, and a negative electrode active material applied onto one surface or two opposite surfaces of the negative electrode current collector. The region in which the negative electrode active material is applied onto the negative electrode current collector is referred to as the coated portion provided on the negative electrode 12. The non-coated portion onto which no negative electrode active material is applied may be provided at the other side end of the negative electrode current collector based on the width direction (the direction parallel to the Z-axis). At least a part of the non-coated portion is used as an electrode tab as it is. That is, the non-coated portion serves as the non-coated portion provided on the negative electrode 12. The non-coated portion provided on the negative electrode 12 is provided at a lower side of the electrode assembly 10 based on the height direction (the direction parallel to the Z-axis), and the electrode assembly 10 is accommodated in the battery can 20.

The non-coated portion provided on the positive electrode 11 and the non-coated portion provided on the negative electrode 12 may protrude in opposite directions. For example, referring to FIG. 6, the non-coated portion provided on the positive electrode 11 may protrude toward the upper side of the electrode assembly 10 based on the height direction (the direction parallel to the Z-axis), and the non-coated portion provided on the negative electrode 12 may protrude toward the lower side of the electrode assembly 10 based on the height direction (the direction parallel to the Z-axis). Therefore, the non-coated portion provided on the positive electrode and the non-coated portion provided on the negative electrode may extend and protrude in the opposite directions in the width direction of the electrode assembly 10, i.e., the height direction (the direction parallel to the Z-axis) of the secondary battery 1.

In the present invention, any active material publicly known in the art may be used, without limitation, as the positive electrode active material applied onto the positive plate and the negative electrode active material applied onto the negative plate.

A typical positive electrode active material, which may be used for a positive electrode of an electrochemical element in the related art, may be used as a non-restrictive example of the positive electrode active material. In particular, lithium manganese oxide, lithium cobalt oxide, lithium nickel oxide, lithium iron oxide, or a combination thereof, i.e., lithium composite oxide may be used.

As an example, the positive electrode active material may include an alkaline metal compound expressed by a general chemical formula A[AₓM_{y}]O_{2+z} (A includes one or more elements among Li, Na, and K, M includes one or more elements selected from Ni, Co, Mn, Ca, Mg, Al, Ti, Si, Fe, Mo, V, Zr, Zn, Cu, Al, Mo, Sc, Zr, Ru, and Cr, x ≥ 0, 1 ≤ x+y ≤2, and -0.1 ≤ z ≤ 2 in which stoichiometric coefficients of materials included in x, y, z, and M are selected so that the compound is kept neutral electrically).

As another example, the positive electrode active material may be an alkaline metal compound xLiM¹O₂-(1-x)Li₂M²O₃ (M¹ includes one or more elements having average oxidation state 3, M² includes one or more elements having average oxidation state 4, and 0≤x≤1) disclosed in US 6,677,082, US 6,680,143, and the like.

As still another example, the positive electrode active material may be lithium metal phosphate expressed by a general chemical formula LiₐM¹ₓFe₁₋ₓM²_{y}P_{1-y}M³_{z}O_{4-z} (M¹ includes one or more elements selected from Ti, Si, Mn, Co, Fe, V, Cr, Mo, Ni, Nd, Al, Mg, and Al, M² includes one or more elements selected from Ti, Si, Mn, Co, Fe, V, Cr, Mo, Ni, Nd, Al, Mg, Al, As, Sb, Si, Ge, V, and S, M³ includes halogen family elements selectively including F, 0 < a ≤ 2, 0 ≤ x ≤ 1, 0 ≤ y < 1, and 0 ≤ z < 1 in which stoichiometric coefficients of materials included in a, x, y, z, M¹, M², and M³ are selected so that the compound is kept neutral electrically) or Li₃M₂(PO₄)₃ (M includes one or more elements selected from Ti, Si, Mn, Fe, Co, V, Cr, Mo, Ni, Al, Mg, and Al).

In particular, the positive electrode active material may include primary particles and/or secondary particles in which the primary particles are agglomerated.

A typical negative electrode active material, which may be used for a negative electrode of an electrochemical element in the related art, may be used for a non-restrictive example of the negative electrode active material. In particular, a lithium adsorption material such as lithium metal or lithium alloy, carbon, petroleum coke, activated carbon, graphite, or other carbon may be used.

As an example, carbon materials, lithium metal or lithium metal compound, silicon or silicon compound, tin or tin compound, and the like may be used as the negative electrode active material. A metal oxide such as TiO₂ and SnO₂ having electric potential of less than 2 V may also be used as the negative electrode active material. Low-crystalline carbon, high-crystalline carbon, and the like may be used as the carbon material.

A porous polymer film, for example, a porous polymer film made of polyolefin-based polymer such as ethylene homopolymer, propylene homopolymer, ethylene/butene copolymer, ethylene/hexene copolymer, or ethylene/methacrylate copolymer may be used singly as the separator or a stack of the porous polymer films may be used as the separator. As another example, a typical porous non-woven fabric, for example, a non-woven fabric made of high-melting point fiberglass, polyethylene terephthalate fiber, or the like may be used as the separator.

At least one surface of the separator may include a coating layer containing inorganic particles. In addition, the separator itself may be a coating layer containing inorganic particles. The particles constituting the coating layer may be coupled by a binder so that an interstitial volume is present between the adjacent particles.

The inorganic particles may be made of inorganic substance with permittivity of 5 or more. As a non-restrictive example, the inorganic particle may include one or more materials selected from a group consisting of Pb (Zr,Ti)O₃(PZT), Pb₁₋ₓLaₓZr_{1-y}Ti_{y}O₃(PLZT), PB(Mg₃Nb_{2/3})O₃-PbTiO₃(PMN-PT), BaTiO₃, hafnia(HfO₂), SrTiO₃, TiO₂, Al₂O₃, ZrO₂, SnO₂, CeO₂, MgO, CaO, ZnO, and Y₂O₃.

The electrolyte may be a salt having a structure such as A⁺B⁻. In this case, A⁺ includes ions including alkaline metal cations such as Li⁺, Na⁺, and K⁺, or a combination thereof. Further, B⁻ includes one or more anions selected from a group consisting of F-, Cl⁻, Br⁻, I-, NO₃⁻, N(CN)²⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂ (CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

In addition, the electrolyte may be dissolved in an organic solvent and used. Propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), γ-butyrolactone, or a mixture thereof may be used as the organic solvent.

Referring to FIGS. 5 and 6, the battery can 20 is an approximately cylindrical receptacle having an opening portion formed at a lower end thereof. For example, the battery can 20 is made of a material such as metal having conductivity. For example, a material of the battery can 20 may be aluminum. A bottom portion of the battery can 20, where the opening portion is provided, will be referred to as an opened end. A lateral surface (outer peripheral surface) of the battery can 20 may be integrated with an upper surface of the battery can 20. The upper surface (surface parallel to the X-Y plane) of the battery can 20 has an approximately flat shape. The upper surface positioned opposite to the opened end will be referred to as a closed end. The battery can 20 accommodates the electrode assembly 10 and an electrolyte through the opening portion formed at the lower side thereof.

The battery can 20 is electrically connected to the electrode assembly 10. For example, the battery can may be electrically connected to the negative electrode 12 of the electrode assembly 10. In this case, the battery can 20 may have the same polarity as the negative electrode 12.

Referring to FIG. 6, the battery can 20 may have a beading portion 21 and a crimping portion 22 formed at a lower end thereof. The beading portion 21 is positioned at a lower side of the electrode assembly 10. The beading portion 21 is formed by pressing a periphery of an outer peripheral surface of the battery can 20. The beading portion 21 prevents the electrode assembly 10, which has a size approximately corresponding to a width of the battery can 20, from being withdrawn through the opening portion formed at the lower end of the battery can 20. The beading portion 21 may serve as a support portion on which the sealing body 30 is seated.

The crimping portion 22 is formed at a lower side of the beading portion 21. The crimping portion 22 has a shape extending and bent to surround a part of an outer peripheral surface of the sealing body 30 disposed at a lower side of the beading portion 21 and surround a part of a lower surface of the sealing body 30.

However, the present invention does not exclude a case in which the battery can 20 does not have the beading portion 21 and/or the crimping portion 22. That is, in the present invention, in case that the battery can 20 does not have the beading portion 21 and/or the crimping portion 22, the electrode assembly 10 may be fixed and/or the battery can 20 may be sealed by a component additionally applied and configured to serve as a stopper for the electrode assembly 10, for example. In addition, if the secondary battery 1 of the present invention includes the sealing body 30, the electrode assembly 10 may be fixed and/or the battery can 20 may be sealed by an additionally applied structure, on which the sealing body 30 may be seated, and/or by welding between the battery can 20 and the sealing body 30, for example. That is, the sealing body may seal the opened end of the battery can.

Referring to FIG. 6, the sealing body 30 may be made of a metallic material to ensure rigidity, for example. The sealing body 30 may cover the opened end formed at the lower end of the battery can 20. That is, the sealing body 30 defines a lower surface of the secondary battery 1.

In the secondary battery 1 of the present invention, the sealing body 30 does not have a polarity even though the sealing body 30 is made of a metallic material having conductivity. The configuration in which the sealing body 30 does not have a polarity may mean that the sealing body 30 is electrically insulated from the battery can 20 and the electrode terminal 40.

Therefore, the sealing body 30 does not serve as the electrode terminal 40, i.e., a positive electrode terminal or a negative electrode terminal. Therefore, the sealing body 30 need not be electrically connected to the electrode assembly 10 and the battery can 20, and the material of the sealing body 30 need not necessarily be conductive metal.

In case that the battery can 20 of the present invention has a beading portion 21, the sealing body 30 may be seated on the beading portion 21 formed on the battery can 20. In addition, in case that the battery can 20 of the present invention has the crimping portion 22, the sealing body 30 may be fixed by the crimping portion 22. A sealing gasket 90 may be interposed between the sealing body 30 and the crimping portion 22 of the battery can 20 to ensure sealability of the battery can 20. Meanwhile, as described above, the battery can 20 of the present invention may not have the beading portion 21 and/or the crimping portion 22. In this case, the sealing gasket 90 may be interposed between the sealing body 30 and a fixing structure provided at the opening portion of the battery can 20 to ensure sealability of the battery can 20.

Referring to FIGS. 5 and 6, the electrode terminal 40 may be electrically connected to the other of the positive electrode 11 and the negative electrode 12. That is, the electrode terminal 40 may have the opposite polarity to the battery can 20. For example, the electrode terminal 40 may be electrically connected to the positive electrode 11 of the electrode assembly 10. Further, a surface of the electrode terminal 40 may be exposed to the outside.

The electrode terminal 40 may be made of a metallic material having conductivity. For example, the electrode terminal 40 may penetrate an approximately central portion of the closed end formed at the upper end of the battery can 20. A part of the electrode terminal 40 may be exposed to an upper side of the battery can 20, and the remaining part of the electrode terminal 40 may be positioned in the battery can 20. For example, the electrode terminal 40 may be fixed onto an inner surface of the closed end of the battery can 20 by riveting. The electrode terminal 40 may penetrate the insulation member 60 and be coupled to the non-coated portion provided on the positive electrode current collector 50 or the positive electrode 11. In this case, the electrode terminal 40 may have a first polarity.

Therefore, the electrode terminal 40 may serve as a positive electrode terminal in the secondary battery 1 of the present invention. In case that the electrode terminal 40 has the first polarity as described above, the electrode terminal 40 is electrically insulated from the battery can 20 having a second polarity. The electrical insulation between the electrode terminal 40 and the battery can 20 may be implemented in various ways.

As another example, the insulation may be implemented by interposing the insulation gasket 70, which will be described below, between the electrode terminal 40 and the battery can 20. On the contrary, the insulation may be implemented by forming an insulating coating layer on a part of the electrode terminal 40. Alternatively, the electrode terminal 40 may be structurally securely fixed so that the electrode terminal 40 and the battery can 20 cannot come into contact with each other. Alternatively, a plurality of methods, among the above-mentioned methods, may be applied.

Referring to FIG. 6, the positive electrode current collector 50 may be coupled to the upper portion of the electrode assembly 10. For example, the positive electrode current collector 50 may be coupled to the non-coated portion provided on the positive electrode 11 on the upper portion of the electrode assembly 10. The positive electrode current collector 50 may be made of a metallic material having conductivity. Although not illustrated in the drawings, the positive electrode current collector 50 may have a plurality of concave-convex portions radially formed on a lower surface of the positive electrode current collector 50.

In case that the concave-convex portions are formed, the positive electrode current collector 50 may be pushed to press the concave-convex portions into the non-coated portion provided on the positive electrode 11.

The secondary battery 1 according to another embodiment of the present invention may not include the positive electrode current collector 50. In this case, the non-coated portion provided on the positive electrode 11 may be electrically connected directly to the electrode terminal 40.

Referring to FIG. 6, the positive electrode current collector 50 may be coupled to the end of the non-coated portion provided on the positive electrode 11. For example, the non-coated portion provided on the positive electrode 11 and the positive electrode current collector 50 may be coupled to each other by laser welding. The laser welding may be performed by partially melting a base material of the positive electrode current collector 50. Alternatively, the laser welding may be performed in a state in which welding solder is interposed between the positive electrode current collector 50 and the non-coated portion. In this case, the solder may have a lower melting point than the positive electrode current collector 50 and the non-coated portion. Meanwhile, resistance welding, ultrasonic welding, and the like may be applied in addition to the laser welding, but the welding method is not limited thereto.

Referring to FIG. 6, the insulation member 60 may be provided between an upper end of the electrode assembly 10 and an inner surface of the battery can 20 or between the inner surface of the battery can 20 and the positive electrode current collector 50 coupled to the upper portion of the electrode assembly 10. The insulation member 60 prevents contact between the battery can 20 and the non-coated portion provided on the positive electrode 11 and/or contact between the positive electrode current collector 50 and the battery can 20. That is, the insulation member 60 is accommodated in the battery can 20 and configured to block the electrical connection between the battery can 20 and the non-coated portion provided on the positive electrode 11. Therefore, the insulation member 60 may be made of a material having insulation performance. For example, the insulation member 60 may include a polymer material.

Referring to FIGS. 5 and 6, the insulation gasket 70 is interposed between the battery can 20 and the electrode terminal 40 and prevents the battery can 20 and the electrode terminal 40, which have the opposite polarities, from coming into contact with each other. That is, the insulation gasket 70 blocks the electrical connection between the battery can 20 and the electrode terminal 40. Therefore, the upper surface of the battery can 20, which has an approximately flat shape, may serve as a terminal of the negative electrode 12 of the secondary battery 1.

Referring to FIG. 6, the negative electrode current collector 80 may be coupled to the lower portion of the electrode assembly 10. The negative electrode current collector 80 may be made of a metallic material having conductivity. The negative electrode current collector 80 may be connected to the non-coated portion provided on the negative electrode 12. In addition, the negative electrode current collector 80 may be electrically connected to the battery can 20. As illustrated in FIG. 2, the negative electrode current collector 80 may be interposed and fixed between the inner surface of the battery can 20 and the sealing gasket 90. On the contrary, the negative electrode current collector 80 may be welded to an inner wall surface of the battery can 20.

Although not illustrated in the drawings, the negative electrode current collector 80 may have a plurality of concave-convex portions radially formed on one surface of the negative electrode current collector 80. In case that the concave-convex portions are formed, the negative electrode current collector 80 may be pushed to press the concave-convex portions into the non-coated portion provided on the negative electrode 12.

The negative electrode current collector 80 may be coupled to the end of the non-coated portion provided on the negative electrode 12. For example, the non-coated portion provided on the negative electrode 12 and the negative electrode current collector 80 may be coupled to each other by laser welding. The laser welding may be performed by partially melting a base material of the negative electrode current collector 80. Alternatively, the laser welding may be performed in a state in which welding solder is interposed between the negative electrode current collector 80 and the non-coated portion. In this case, the solder may have a lower melting point than the negative electrode current collector 80 and the non-coated portion. Meanwhile, resistance welding, ultrasonic welding, and the like may be applied in addition to the laser welding, but the welding method is not limited thereto.

Although not illustrated in the drawings, the negative electrode current collector 80 may be coupled to a coupling surface formed by bending the end of the non-coated portion, which is provided on the negative electrode 12, in the direction parallel to the negative electrode current collector 80. For example, the bending direction of the non-coated portion provided on the negative electrode 12 may be a direction toward the winding center C of the electrode assembly 10. In case that the non-coated portion provided on the negative electrode 12 has a bent shape as described above, a space occupied by the non-coated portion may be reduced, thereby improving energy density. In addition, the coupling area between the non-coated portion and the negative electrode current collector 80 increases, which makes it possible to increase a coupling force and reduce resistance.

According to the embodiment of the present invention, the secondary battery is a cylindrical secondary battery. For example, the secondary battery may include the battery can that accommodates the jelly roll. The battery can may have a cylindrical shape. A diameter of a circle of each of the two opposite ends of the battery can may be 30 mm to 55 mm, and a height of the battery can may be 60 mm to 120 mm. For example, a value of circular diameter x height of the cylindrical battery can may be 40 mm x 60 mm, 40 mm x 80 mm, 40 mm x 90 mm, or 40 mm x 120 mm. The secondary battery may be a battery cell.

In particular, for example, the cylindrical battery cell may be a cylindrical battery cell having a ratio of a form factor larger than about 0.4 (a ratio of the form factor is defined as a value made by dividing a diameter of the cylindrical battery cell by a height of the cylindrical battery cell, i.e., a ratio of a diameter Φ to a height H).

In this case, the form factor means a value indicating the diameter and the height of the cylindrical battery cell. For example, the cylindrical battery cell according to the embodiment of the present invention may be 46110 cell, 48750 cell, 48110 cell, 48800 cell, 46800 cell, and 46900 cell. In the numerical value indicating the form factor, the first two numbers indicate a diameter of the cell, the next two numbers indicate a height of the cell, and the final number 0 indicates that a cross-section of the cell is circular.

The battery cell according to the embodiment of the present invention is an approximately cylindrical cell, and the battery cell may have a diameter of about 46 mm, a height of about 110 mm, and a ratio of the form factor of 0.418.

The battery cell according to another embodiment of the present invention is an approximately cylindrical cell, and the battery cell may have a diameter of about 48 mm, a height of about 75 mm, and a ratio of the form factor of 0.640.

The battery cell according to still another embodiment of the present invention is an approximately cylindrical cell, and the battery cell may have a diameter of about 48 mm, a height of about 110 mm, and a ratio of the form factor of 0.418.

The battery cell according to yet another embodiment of the present invention is an approximately cylindrical cell, and the battery cell may have a diameter of about 48 mm, a height of about 80 mm, and a ratio of the form factor of 0.600.

The battery cell according to still yet another embodiment of the present invention is an approximately cylindrical cell, and the battery cell may have a diameter of about 46 mm, a height of about 80 mm, and a ratio of the form factor of 0.575.

The battery cell according to another further embodiment of the present invention is an approximately cylindrical cell, and the battery cell may have a diameter of about 46 mm, a height of about 90 mm, and a ratio of the form factor of 0.511.

In the related art, battery cells having the ratio of the form factor of approximately 0.4 or less are used. That is, in the related art, 18650 cell, 21700 cell, and the like are used, for example. In the case of 18650 cell, a diameter thereof is about 18 mm, a height thereof is about 65 mm, and a ratio of the form factor thereof is 0.277. In the case of 21700 cell, a diameter thereof is about 21 mm, a height thereof is about 70 mm, and a ratio of the form factor thereof is 0.300.

Still yet another embodiment of the present invention provides a battery module and a battery pack that include the secondary battery according to the above-mentioned embodiment.

The secondary battery according to the above-mentioned embodiment may be used to manufacture the battery pack.

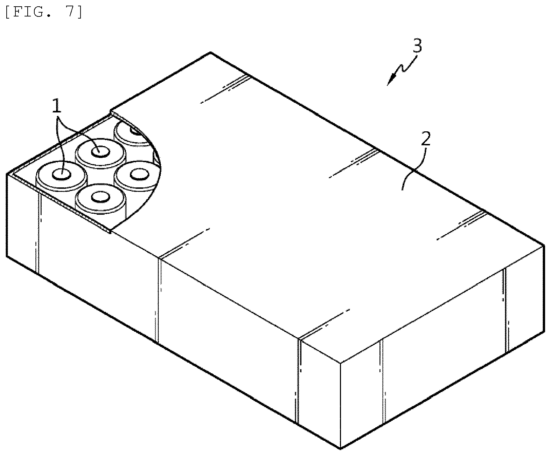

FIG. 7 is a view illustrating a schematic configuration of a battery pack including the secondary battery in FIG. 6.

Referring to FIG. 7, a battery pack 3 according to an embodiment of the present invention includes an assembly to which the secondary battery 1 is electrically connected, and a pack housing 2 configured to accommodate the assembly. The secondary battery 1 is the battery cell according to the above-mentioned embodiment. For convenience of illustration, components such as busbars for electrical connection between the cylindrical secondary batteries 1, a cooling unit, and an external terminal are omitted from the drawings.

Another further embodiment of the present invention provides a vehicle including the battery pack according to the above-mentioned embodiment. The battery pack 3 may be mounted on a vehicle. For example, the vehicle may be an electric vehicle, a hybrid vehicle, or a plug-in hybrid vehicle. The vehicle may be a four-wheel vehicle or a two-wheel vehicle.

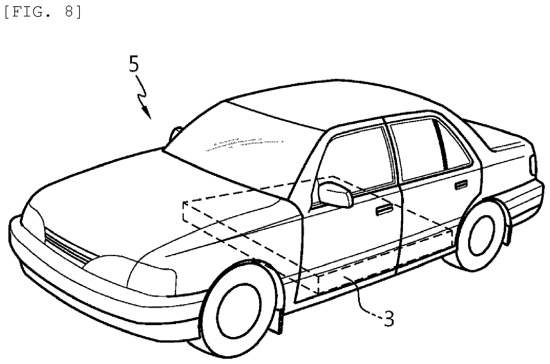

FIG. 8 is a view illustrating a schematic configuration of a vehicle including the battery pack in FIG. 7.

Referring to FIG. 8, a vehicle 5 according to an embodiment of the present invention includes the battery pack 3 according to the embodiment of the present invention. The vehicle 5 operates by receiving electric power from the battery pack 3 according to the embodiment of the present invention.

The present invention has been described with reference to the limited embodiments and the drawings, but the present invention is not limited thereto. The described embodiments may be changed or modified by those skilled in the art to which the present invention pertains within the technical spirit of the present invention and within the scope equivalent to the appended claims.

## Claims

1. A current collector comprising:
a body part having conductivity;
a terminal coupling part configured to be coupled to an electrode terminal; and
a fuse part configured to connect the body part and the terminal coupling part,
wherein the fuse part comprises:
at least one notch provided on one surface of the fuse part; and
an insulation portion provided on at least one surface of the fuse part.

2. The current collector of claim 1, wherein the insulation portion is provided on a first surface opposite to a second surface of the fuse part in which the notch is provided.

3. The current collector of claim 1, wherein the insulation portion is an insulation tape.

4. The current collector of claim 1, wherein the insulation portion is an insulation layer.

5. The current collector of claim 4, wherein the insulation layer is provided in a groove provided in at least one surface of the fuse part.

6. The current collector of claim 5, wherein the groove is provided in a first surface opposite to a second surface of the fuse part in which the notch is provided.

7. The current collector of claim 6, wherein the groove is provided at a position corresponding to the notch.

8. The current collector of claim 4, wherein the insulation layer is made of adhesive polymer.

9. The current collector of claim 8, wherein the adhesive polymer includes one or more materials selected from a group consisting of polyimide (PI), polyethylene (PE), polypropylene (PP), polybutylene terephthalate (PBT), and perfluoroalkoxy alkane (PFA).

10. The current collector of claim 9, wherein the polypropylene (PP) contains polypropylene maleic anhydride (PP-MAH) capable of being bonded by applied heat.

11. A jelly roll comprising:
an electrode assembly having a structure made by winding a stack of a positive electrode, a separator, and a negative electrode; and
the current collector according to any one of claims 1 to 10 provided on at least one end of the electrode assembly.

12. The jelly roll of claim 11, wherein the insulation portion is provided on a surface of the current collector that faces the electrode assembly.

13. The jelly roll of claim 11, wherein the notch is provided in a region of one surface of the fuse part overlying an area between a periphery of a mandrel part of the electrode assembly to an outer peripheral portion of the electrode assembly.

14. A secondary battery comprising the jelly roll according to claim 11.

15. A battery pack comprising the secondary battery according to claim 14.

16. A vehicle comprising the battery pack according to claim 15.
